# EUROPÄISCHE PATENTSCHRIFT

(11) **EP 2 025 604 B1**
(45) Veröffentlichungstag und Bekanntmachung des Hinweises auf die Patenterteilung: **03.10.2012**
(21) Anmeldenummer: 08013536.1
(22) Anmeldetag: 28.07.2008
(51) Int. Cl.: B29C 65/02, B29C 51/26, B29C 49/42, B67C 3/02

(54) **Verfahren zur Herstellung und Befüllung von Behältern**
Method for manufacturing a container and for filling the same
Procédé de fabrication d'un récipient et de remplissage du même

(30) Priorität: 30.07.2007 DE 102007035725
(43) Veröffentlichungstag der Anmeldung: 18.02.2009
(73) Patentinhaber: TEPRO Kunststoff-Recycling GmbH & Co., 12107 Berlin (DE)
(72) Erfinder: Mehnert, Gottfried, 14195 Berlin (DE)
(74) Vertreter: Flosdorff, Jürgen

(56) Entgegenhaltungen:
- WO-A-02/051619
- US-A- 3 328 498
- US-A- 4 796 766

## Beschreibung

Die Erfindung betrifft ein Verfahren zur Herstellung und Befüllung von Behältern aus Kunststoff. Die Behälter sind insbesondere zur Verpackung von Getränken jeglicher Art wie z.B. aromatischen Getränken, Säften, Wasser etc. vorgesehen. Sie sind aber nicht nur zur Aufnahme von Getränken geeignet, sondern auch für Behälterinhalte anderer Art.

Die Behälter bestehen aus einem Kunststoff, und zwar aus sogenannten Monomaterial oder aber aus Mehrschichtmaterial, wie dies insbesondere im Koextrusionsverfahren herstellbar ist. Durch eine geeignete Layerauswahl kann eine exakte Anpassung an die Bedürfnisse des abzufüllenden Behälterinhalts erzielt werden, beispielsweise hinsichtlich einer Sauerstoffbarriere, CO₂-Festigkeit, Wasserdampfbarriere oder Sperre gegen aromatischen Verlust.

Sehr häufig erfolgen Behälterherstellung und Abfüllung an getrennten Orten, was im Regelfall dazu führt, dass ein enormes Behältervolumen mit vergleichbar geringem Gewicht transportiert und auch gelagert werden muss.

EP 1 452 455 A1 offenbart eine Kunststofflasche, die einstückig im Blasverfahren hergestellt werden soll, bei der ein Bodenteil mit einem Außengewinde versehen ist, während der untere Endbereich des Flaschenkörpers ein Innengewinde hat. Nach dem Blasvorgang soll das untere Teil, d.h. der Boden mit dem Schraubgewinde abgetrennt werden, wobei es mit dem Flaschenkörper verschraubbar ist. Diese Flasche ist weder im Blasverfahren noch im Spritzgussverfahren herstellbar.

WO 79/00722 A1 offenbart einen Behälter, der im Spritzgussverfahren zwangsläufig ohne Boden hergestellt und nach dem Befüllen mit einem Boden versehen wird. EP 1 038 785 A2 schlägt vor, einen Behälter nach Abgabe des Behälterinhalts zum Entsorgen in der Mitte durchzuschneiden, so dass die so entstehenden Behälterteile ineinander stapelbar sind und beim Transport zu einer Recycling-Sammelstelle wenig Platz einnehmen.

WO 02/051619 A offenbart in Figur 5 ein Halbzeug, das aus einem sich querschnittlich zum bodenseitigen Ende hin erweiternden Behälterkörper und einem Bodenteil zusammen gesetzt wird. Die Teile sind im Spritzgussverfahren hergestellt und die Formschräge des Behälterkörpers dient dazu, die Entformung des Behälterkörpers zu erleichtern. Anschließend werden die zusammengesetzten Teile durch einen Blasvorgang weiter verarbeitet, wobei ein Behälter mit im wesentlichen zylindrischer Behälterwand entsteht.

US-A-3 328 498 offenbart einen im Blasverfahren von oben und unten hergestellten doppelten Behälterkörper, der in zwei Teile geschnitten wird, die jeweils mit einem Bodenteil versehen werden. Die dadurch entstehenden Behälter haben eine zylindrische Form. US-A-4 796 766 offenbart eine ähnliche Vorgehensweise, mit der Behälter mit zylindrischer Form entstehen.

Der vorliegenden Erfindung liegt die Aufgabe zugrunde, ein Verfahren zur Herstellung von Behältern anzugeben, bei denen der oben angegebene Nachteil des großen Transport- und/oder Lagervolumens vor dem Befüllen weitgehend vermieden ist.

Diese Aufgabe wird erfindungsgemäß durch die Merkmale der Patentansprüche 1 bis 2 gelost.

Vorteilhafte Ausgestaltungen der Erfindung sind in den abhängigen Ansprüchen gekennzeichnet.

Ein erfindungsgemäßes Verfahren sieht vor, dass ein doppelter Behälterkörper im Blasverfahren von oben und unten ausgebildet wird, wobei sich jeder der beiden Behälterkörper querschnittlich zum (zugehörigen) bodenseitigen Ende hin erweitert, derart, dass mehrere dieser Behälterkörper ineinander stapelbar sind, und dass der doppelte Behälterkörper durch einen Schneidvorgang innerhalb oder außerhalb der Blasform in zwei Behälterkörper geteilt wird.

Diese Behälterkörper nehmen beim Transport von dem Herstellungsort zum Abfüllort nur ein geringes Transportvolumen in Anspruch, da sie in einem ineinander gestapelten Zustand transportiert Werden.

Das Verfahren sieht ferner vor, dass Bodenteile getrennt hergestellt und unlösbar mit den Bodenteilen, vorzugsweise durch Ringverschweißung, verbunden werden. Das Anbringen der Bodenteile erfolgt vor oder nach dem Befüllen des Behälterkörpers.

Ein alternatives erfindungsgemäßes Verfahren sieht vor, dass ein Behälterkörper im Extrusionsblasverfahren oder im biaxialen Reckverfahren von oben oder unten geblasen wird, wobei sich der Behälterkörper wiederum querschnittlich zum bodenseitigen Ende hin erweitert, derart, dass mehrere Behälterkörper ineinander stapelbar sind, und dass der beim Blasvorgang ausgebildete Behälterboden in der Blasform oder außerhalb der Blasform abgetrennt wird. Ein neues Bodenteil wird getrennt hergestellt und vor oder nach dem Befüllen des Behälterkörpers mit diesem unlösbar verbunden.

Die Erfindung ermöglicht es, eine große Anzahl von Behälterkörpern im ineinander gestapeltem Zustand zu transportieren und zu lagern, wodurch das Transport- und Lagervolumen signifikant reduziert werden und beispielsweise nur noch 10% des Volumens herkömmlicher, nicht ineinander stapelbarer Behälter betragen. Dabei bildet ein derartiges Stapeln der Behälterkörper zudem einen natürlichen Schutz gegen Verschmutzung, was Reinigungsprozesse vor dem Befüllen ganz oder teilweise überflüssig macht und zur Verminderung des Energieverbrauchs beiträgt.

Der Behälterkörper kann einen kreisrunden Querschnitt haben und sich vom Hals oder Schulterbereich leicht konisch zum Bodenbereich hin erweitern. Der Behälter kann aber grundsätzlich jede beliebige Querschnittsform haben, beispielsweise kann er oval, rechteckig oder vieleckig, vorzugsweise dabei mit gerundeten Ecken, sein, wobei wesentlich ist, dass sich der jeweilige Querschnitt z.B. kontinuierlich oder stärker zunehmend derart nach unten erweitert, dass ein Behälterkörper den anderen in ineinander gestapelter Form bis auf einen unteren Bereich in sich aufnehmen kann.

Der Behälterkörper kann mit Versteifungsrippen versehen sein, die in Querrichtung oder Längsrichtung verlaufen können und nicht nur die Festigkeit erhöhen, sondern die Reibung zwischen ineinander gestapelten Behälterkörpern verringern. Der Behälterkörper kann auch wenigstens eine Einbuchtung aufweisen, die als Griffmulde dienen kann.

Die Bodenteile werden getrennt hergestellt und bestehen bevorzugt aus demselben Material oder derselben Materialkombination wie die Behälterkörper.

Die Bodenteile werden erst nach dem Transport der Behälterkörper und gegebenenfalls nach ihrer Lagerung an den Behälterkörpern dicht befestigt. Dabei erfolgt dies vor dem Befüllen der Behälter oder auch nach dem Befüllen, wenn zuvor die Behälteröffnung verschlossen wurde und der Befüllvorgang durch die offene Bodenöffnung erfolgt, was im Rahmen der Erfindung liegt.

Bei einer "Single"-Herstellung, bei der in der Blasform ein einziger Behälter oder Behälterkörper geblasen wird, wird der dabei ausgebildete Boden vorzugsweise bereits in der Form nach dem Verblasen abgeschnitten, wobei dies aber auch nach Entnahme aus der Form durch eine Schneidevorrichtung erfolgen kann.

Bei der "Tandemblasweise", bei der durch Blasen von oben und unten in der Blasform zwei Behälterkörper hergestellt werden, entsteht kein Boden an den Behälterkörpern, da die beiden Behälterkörper sozusagen "Bodenrand an Bodenrand" gefertigt werden und nach dem Verblasen bereits in der Form zu zwei getrennten Behälterkörpern geteilt werden können. Auch hier kann das Teilen in zwei Behälterkörper natürlich auch außerhalb der Blasform erfolgen.

Dieses "Tandemblasen" verringert erheblich den Material- und Energieverbrauch, da hier kein Bodenabfall besteht, was bei herkömmlich geblasenen (vollständig geblasenen) Behältern stets der Fall ist. Das "Tandemblasen" hat auch den Vorteil einer Verdoppelung des Ausstoßes der Maschine.

Das Bodenteil bzw. der Bodendeckel wird im Spritz- oder Tiefziehverfahren hergestellt, wobei aber auch andere Verfahren geeignet sind. Durch Ringverschweißung wird das Bodenteil schließlich absolut dicht mit dem Behälterkörper verbunden, wobei das Bodenteil dieselben Materialeigenschaften wie der Behälterkörper haben sollte.

Eine andere bevorzugte Herstellungsart gemäß vorangegangener Beschreibung ist, dass der Behälterkörper im sogenannten biaxialen Reckverfahren hergestellt wird. Die dafür notwendigen Einrichtungen müssen hier nicht beschrieben werden, sie orientieren sich an den allgemein am Markt befindlichen Einrichtungen. Dabei können die Behälterkörper sowohl aus einem Monomaterial als auch aus einem viellagigen Multilayeraufbau hergestellt sein.

Ein bevorzugter Verfahrensablauf sieht folgende Schritte vor:
- Herstellen der Behälterkörper im Extrusionblasverfahren oder biaxialen Reckverfahren
- Stapeln der Behälterkörper in geeigneter Länge
- Herstellung der Bodenteile im Spritzgieß- oder Tiefziehverfahren
- Transport von Behältern und Bodenteilen zum Abfüllort oder zur Lagerung
- Die Behälterkörper werden durch geeignete Automaten "entstapelt" und aufgestellt
- Die Bodenteile bzw. Bodendeckel werden eingeschoben oder aufgeschoben
- Die Bodenteile und Behälterkörper werden dicht ringverschweißt
- Der Behälter wird abgefüllt, wobei dieser Schritt auch vor dem Anbringen des Bodenteils erfolgen kann.

Weitere Einzelheiten der Erfindung ergeben sich aus der nachfolgenden Beschreibung einiger bevorzugter Ausführungsformen von Behälterkörpern und Bodenteilen sowie anhand der Zeichnungen. Dabei zeigen rein schematisch:
- Figur 1: einen in einer Einzelform geblasenen Behälterkörper;
- Figur 2: einen in einer Tandenform geblasenen Doppelbehälterkörper;
- Figur 3: drei ineinander gestapelte Behälterkörper;
- Figuren 4a:
- und 4b: zwei Bodendeckel;

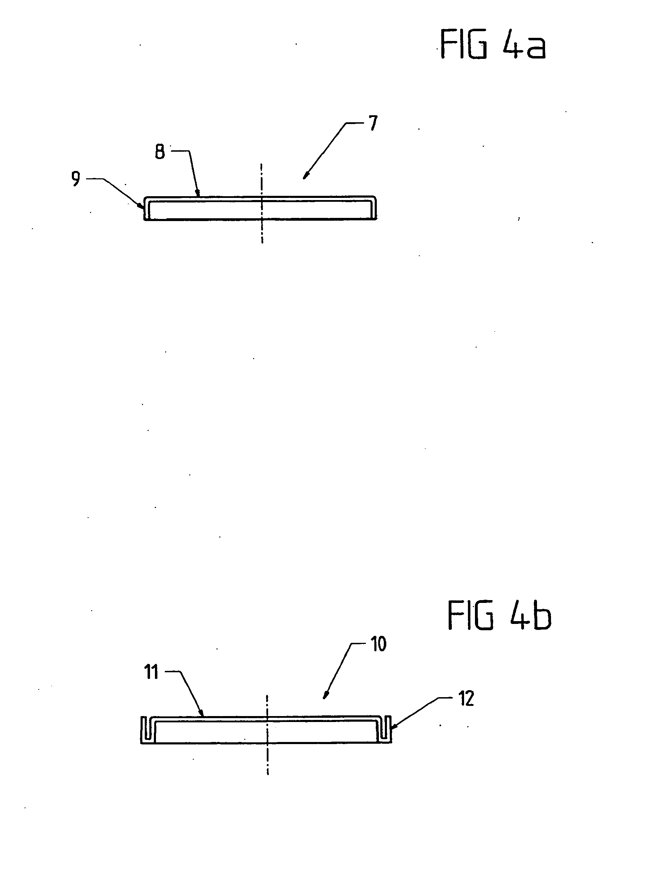

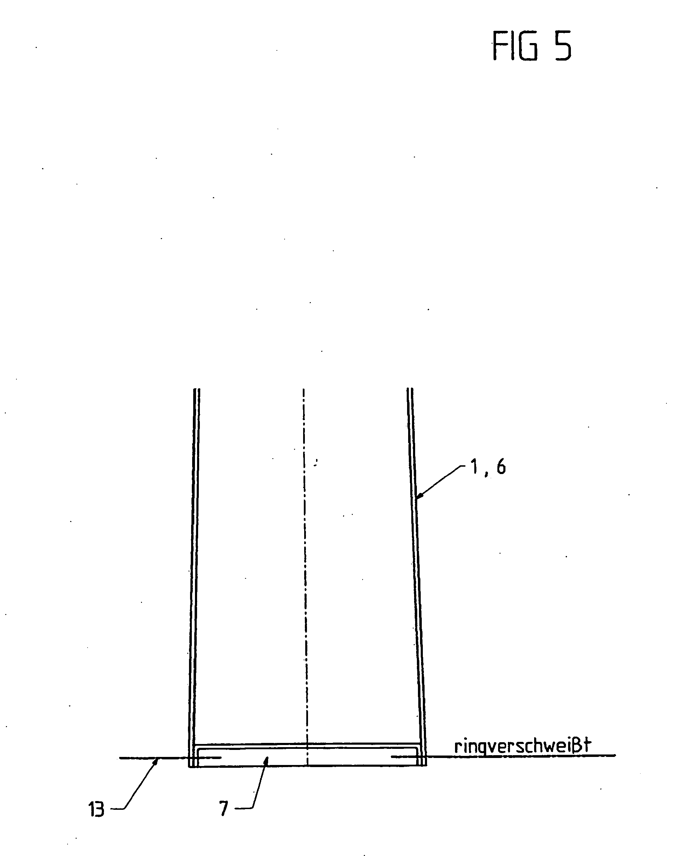

- Figur 5: den Bodendeckel gemäß Figur 4a, in einem in einen Behälterkörper eingeschobenen und mit diesem ringverschweißten Zustand;

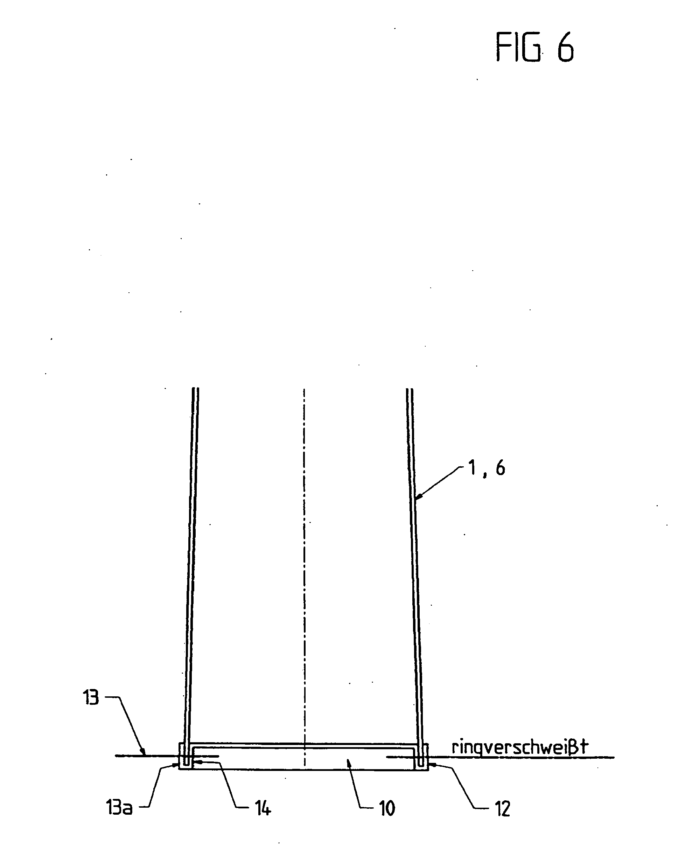

- Figur 6: den in Figur 4b dargestellten Bodendeckel, in einem auf den unteren Rand eines Behälterkörpers aufgeschobenen und mit diesem ringverschweißten Zustand;

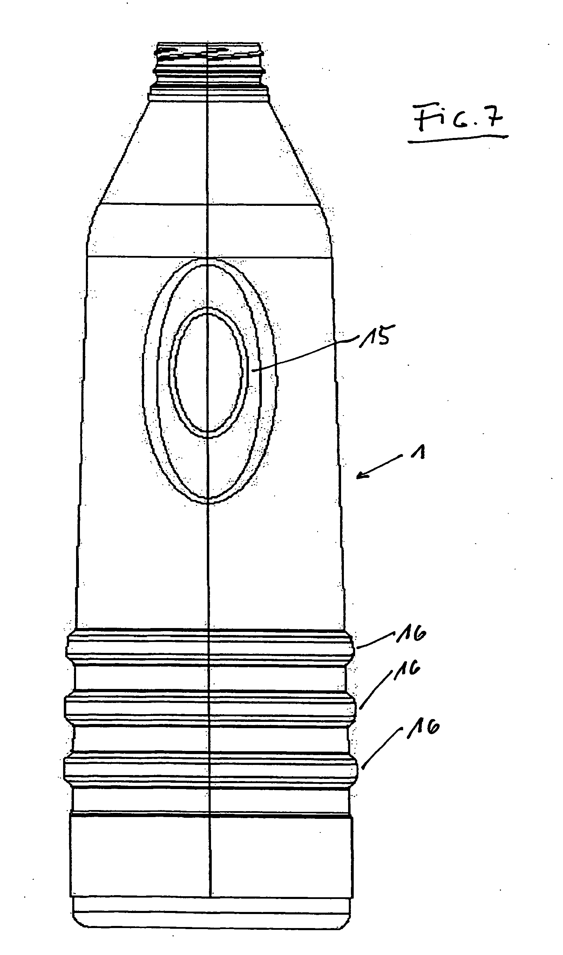

- Figuren 7 bis 9: weitere Formen von ineinander stapelbaren Behälterkörpern.

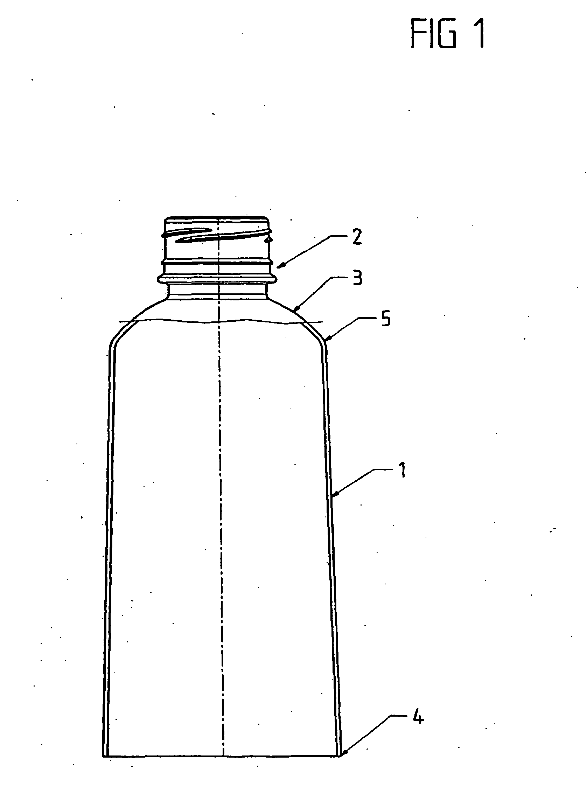

Figur 1 zeigt einen rein schematischen Längsschnitt durch einen flaschenförmigen Behälterkörper 1, der eine herkömmliche Flaschenöffnung 2 mit einem anschließenden Schulterbereich 3 aufweist. Von diesem Schulterbereich 3 an erweitert sich der Querschnitt des Behälterkörpers 1 kontinuierlich bis zum unteren Ende 4 des Behälterkörpers, so dass die Umfangswand des Behälterkörpers 1 vom Ende des Schulterbereichs 5 an leicht konisch verläuft. Der Übergang des Schulterbereichs 3 zur Umfangswand des Behälterkörpers 1 ist gerundet.

Der Behälterkörper 1 ist in einer "Single"-Blasform geblasen, wobei zunächst ein Boden an dem Behälterkörper 1 entsteht. Dieser Boden ist entweder in der Blasform oder nach Entnahme des Behälters aus der Blasform abgetrennt, bzw. abgeschnitten worden.

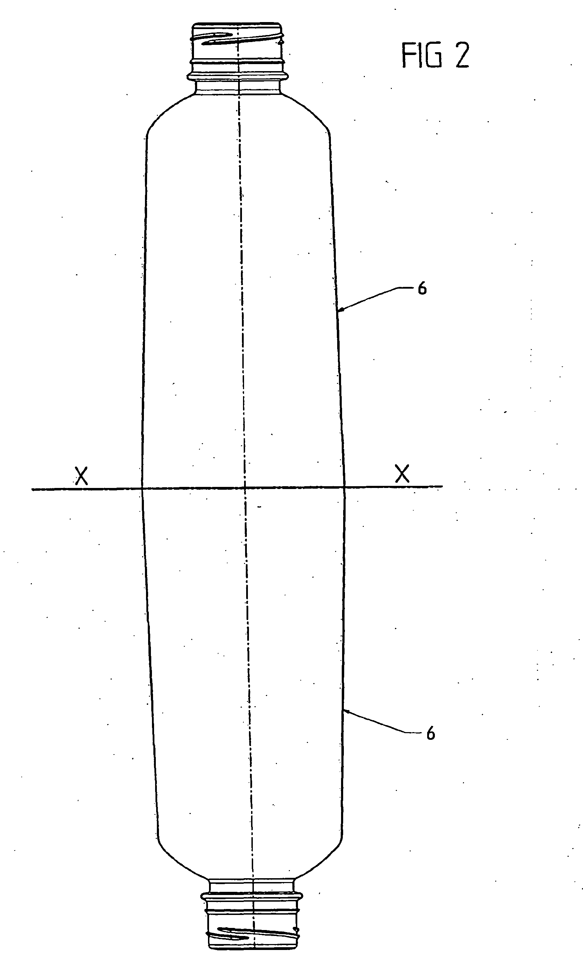

Figur 2 zeigt ebenfalls in einem rein schematischen Längsschnitt einem in einer "Tandem"-Blasform ausgebildeten Doppelbehälterkörper, bei dem zwei miteinander verbundene Behälterkörper 6 ohne Boden hergestellt sind. Die beiden Behälterkörper 6 werden entweder in der Tandem-Blasform oder außerhalb derselben durch eine Schneidevorrichtung entlang der Linie X-X getrennt.

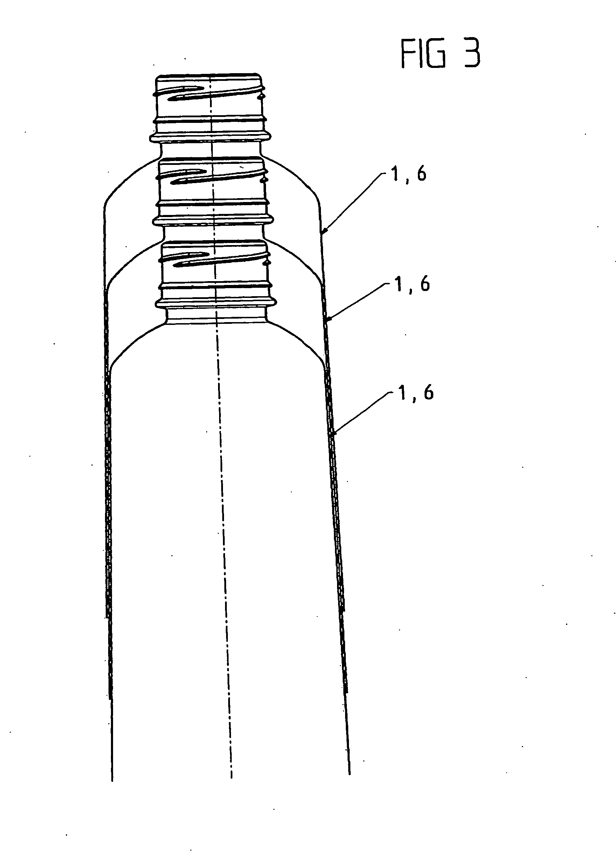

Figur 3 zeigt drei einander gestapelte Behälterkörper 1 bzw. 6, wobei die Stapellänge durch den Abstand der Behälterhälse bestimmt wird. Es lassen sich beliebig viele Behälterkörper ineinander stapeln.

Figur 4a zeigt einen Bodendeckel 7, der aus einer ebenen Bodenplatte 8 und einem an deren Rand angesetzten, abgewinkelten Ring 9 besteht.

Figur 4b zeigt einen alternativen Bodendeckel 10, bei dem an einer ebenen Bodenplatte 11 ein querschnittlich U-förmiger Ring 12 angeformt ist, zwischen dessen beiden Schenkeln ein Abstand verbleibt, der im wesentlichen mit der Wanddicke des Behälterkörpers 1 bzw. 6 übereinstimmt.

Figur 5 zeigt den Zustand, in dem ein Bodendeckel 7 in die bodenseitige Öffnung eines Behälterkörpers 1 oder 6 eingeschoben ist und mit seinem ringförmigen Rand 9 an der Innenseite des Behälterkörpers 1 oder 6 anliegt. Der Bodendeckel 7 ist mit dem Behälterkörper 1 oder 6 ringverschweißt, was durch die strichpunktierte Linie 13 angedeutet ist.

Figur 6 zeigt einen Zustand, in dem ein Bodendeckel 10 so auf den unteren Randbereich eines Behälterkörpers 1 oder 6 aufgeschoben ist, dass dieser dicht in den Zwischenraum zwischen den beiden Stegen 13a, 14 des Rings 12 eingreift. Auch hier deutet die strichpunktierte Linie 13 die Ringverschweißung zwischen diesen beiden Teilen an.

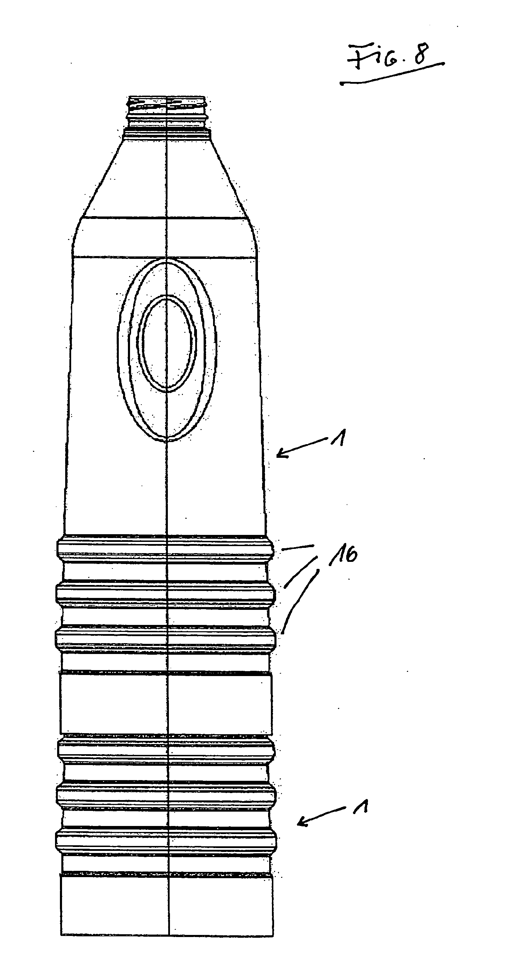

Die Figuren 7 bis 9 zeigen weitere Formen von ineinander stapelbaren Behälterkörpern 1. Figur 7 zeigt einen Behälterkörper mit einer als Griffmulde dienenden Einbuchtung 15 in seinem oberen Bereich und mit mehreren in Umfangsrichtung verlaufenden Versteifungsrippen 16 im unteren Bereich des Behälterkörpers. Figur 8 zeigt zwei derartige ineinander gestapelte Behälterkörper 1.

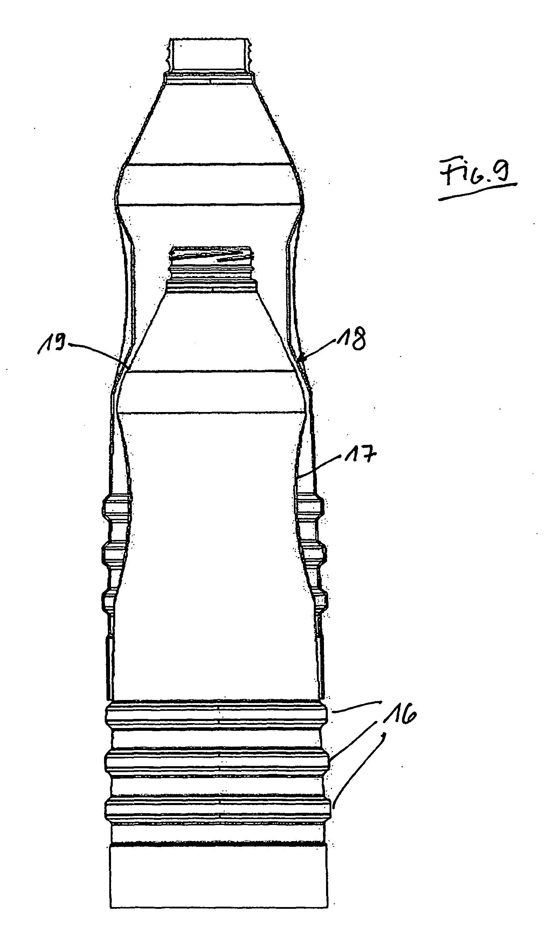

Figur 9 zeigt ineinander gestapelte Behälterkörper 1, die im oberen Bereich eine umlaufende Einbuchtung 17 haben, deren unterer Rand 18 beim Ineinanderstapeln als Anschlag für den Halsbereich 19 des aufgenommenen Behälterkörpers dient. Auch dieser Behälterkörper enthält umlaufende Versteifungsrippen.

Grundsätzlich können die erfindungsgemäßen Behälterkörper jede beliebige Kontur haben, solange die Behälterkörper ineinander stapelbar sind.

Es wird betont, dass die Erfindung nicht auf die beschriebenen und dargestellten Ausführungsformen beschränkt ist. Vielmehr sind alle offenbarten Merkmale auf jede Weise einzeln miteinander kombinierbar.

## Patentansprüche

1. Verfahren zur Herstellung und Befüllung von Behältern aus Kunststoff,
**gekennzeichnet durch** folgende Schritte:
a) Herstellen von doppelten Behälterkörpern im Blasverfahren von oben und unten, wobei jeder Behälterkörper sich querschnittlich zum bodenseitigen Ende hin erweitert, derart, dass mehrere Behälterkörper ineinander stapelbar sind;
b) Teilen der doppelten Behälterkörper in zwei Behälterkörper **durch** einen Schneidvorgang innerhalb oder außerhalb der Blasform;
c) Ineinanderstapeln der Behälterkörper;
d) getrenntes Herstellen von Bodenteilen im Spritzguß- oder Tiefziehverfahren;
e) Transportieren der ineinander gestapelten Behälterkörper und Bodenteile zum Abfüllort;
f) Entstapeln der Behälterkörper **durch** geeignete Automaten
g) unlösbares Verbinden der Behälterkörper mit den Bodenteilen und
h) Befüllen der Behälter, wobei dieser Schritt nach oder vor Schritt f) erfolgt.

2. Verfahren zur Herstellung und Befüllung von Behältern aus Kunststoff mit folgenden A Schritten:
a) Herstellen von Behälterkörpern im Extrusionsblasverfahren oder im biaxialen Reckverfahren von oben oder unten, wobei die Behälterkörper sich querschnittlich zum bodenseitigen Ende hin erweitern, derart, dass mehrere Behälterkörper ineinander stapelbar sind;
b) Abtrennen der dabei ausgebildeten Behälterböden in der Blasform oder außerhalb der Blasform;
c) Ineinanderstapeln der Behälterkörper;
d) getrenntes Herstellen von neuen Bodenteilen im Spritzguß- oder Tiefziehverfahren;
e) Transportieren der ineinander gestapelten Behälterkörper und Bodenteile zum Abfüllort;
f) Entstapeln der Behälkörper durch geeignete Automaten
g) unlösbares Verbinden der Behälterkörper mit den neuen Bodenteilen und
h) Befüllen der Behälter, wobei dieser Schritt nach oder vor Schritt f) erfolgt.

3. Verfahren nach einem der Ansprüche 1 oder 2,
**dadurch gekennzeichnet,**
**dass** bei Schritt g) in die Bodenöffnung des Behälterkörpers ein Bodenteil eingeschoben wird und mit dem Behälterkörper ringverschweißt wird.

4. Verfahren nach einem der Ansprüche 1 oder 2,
**dadurch gekennzeichnet,**
**dass** bei Schritt g) auf den Randbereich des Behälterkörpers an der Bodenöffnung ein Bodenteil aufgeschoben und mit dem Behälterkörper ringverschweißt wird.

5. Verfahren nach einem der Ansprüche 1 bis 4,
**dadurch gekennzeichnet,**
**dass** der Behälterkörper aus einem Monomaterial hergestellt wird.

6. Verfahren nach einem der Ansprüche 1 bis 4,
**dadurch gekennzeichnet,**
**dass** der Behälterkörper aus einem Multilayermaterial hergestellt wird.

7. Verfahren nach einem der Ansprüche 1 bis 6,
**dadurch gekennzeichnet,**
**dass** das Bodenteil aus demselben Material oder derselben Materialkombination wie der Behälterkörper hergestellt wird.

## Claims

1. A method of manufacturing and filling containers of plastic material, **characterised by** the following steps:
a) manufacturing double container bodies in a blow moulding process from above and below, whereby each container body is of broadening cross section towards the base end such that a plurality of container bodies may be stacked within one another;
b) splitting the double container bodies into two container bodies by a cutting process inside or outside the blow mould;
c) stacking the container bodies within one another;
d) separately manufacturing base members in an injection moulding or deep drawing process;
e) transporting the container bodies stacked within one another and the base members to the filling location;
f) unstacking the container bodies with suitable machines;
g) permanently connecting the container bodies to the base members; and
h) filling the containers, whereby this step occurs before or after step f).

2. A method of manufacturing and filling containers of plastic material with the following steps;
a) manufacturing container bodies in extrusion blow moulding process or in a biaxial stretch forming process from the top or bottom, wherein the container bodies are of broadening cross section towards the base end such that a plurality of container bodies may be stacked within one another;
b) separating the container bases thus formed in the blow mould or outside the blow mould;
c) stacking the container bodies within one another;
d) separately manufacturing new base members in an injection moulding or deep drawing process;
e) transporting the container bodies stacked within one another and the base portions to the filling location;
f) unstacking the container bodies with suitable machines;
g) permanently connecting the container bodies to the new base members; and
h) filling the containers, whereby this step occurs before or after step f).

3. A method as claimed in claim 1 or 2, **characterised in that** in step g) a base member is inserted into the base opening in the container body and is ring welded to the container body.

4. A method as claimed in one of claims 1 or 2, **characterised in that** in step g) a base member is pushed onto the edge region of the container body at the base opening and is ring welded to the container body.

5. A method as claimed in one of claims 1 to 4, **characterised in that** container body is manufactured from mono-material.

6. A method as claimed in one of claims 1 to 4, **characterised in that** the container body is manufactured from a multilayer material.

7. A method as claimed in one of claims 1 to 6, **characterised in that** the base member is manufactured from the same material or the same material combination as the container body.

## Revendications

1. Procédé de fabrication et de remplissage de récipients en plastique,
**caractérisé par** les étapes suivantes :
a) fabrication de doubles corps de récipient dans le procédé de soufflage par le haut et le bas, sachant que chaque corps de récipient s'élargit en section transversale vers l'extrémité côté fond de telle manière que plusieurs corps de récipient puissent être empilés les uns dans les autres ;
b) séparation des doubles corps de récipient en deux corps de récipient par un processus de coupe dans ou hors du moule de soufflage ;
c) empilage des corps de récipients ;
d) fabrication séparée des parties de fond dans le procédé de moulage par injection ou d'emboutissage profond ;
e) transport des corps de récipient empilés les uns dans les autres et des parties de fond vers le lieu de remplissage ;
f) dépilage des corps de récipients par des automates appropriés ;
g) liaison indétachable des corps de récipient avec les parties de fond et
h) remplissage des récipients, sachant que cette étape est effectuée après ou avant l'étape f).

2. Procédé de fabrication et de remplissage de récipients en plastique, **caractérisé par** les étapes suivantes :
a) fabrication de corps de récipient dans le procédé de soufflage par extrusion ou dans le procédé d'étirage biaxe par le haut ou le bas, sachant que les corps de récipient s'élargissent en section transversale vers l'extrémité côté fond de telle manière que plusieurs corps de récipient puissent être empilés les uns dans les autres ;
b) séparation des fonds de récipient réalisés dans ou hors du moule de soufflage ;
c) empilage des corps de récipients ;
d) fabrication séparée des nouvelles parties de fond dans le procédé de moulage par injection ou d'emboutissage profond ;
e) transport des corps de récipient empilés les uns dans les autres et des parties de fond vers le lieu de remplissage ;
f) dépilage des corps de récipients par des automates appropriés ;
g) liaison indétachable des corps de récipient avec les nouvelles parties de fond et
h) remplissage des récipients, sachant que cette étape est effectuée après ou avant l'étape f).

3. Procédé selon l'une quelconque des revendications 1 ou 2,
**caractérisé en ce**
**qu'**à l'étape g), une partie de fond est insérée dans l'ouverture de fond du corps de récipient et est soudée de manière annulaire au corps de récipient.

4. Procédé selon l'une quelconque des revendications 1 ou 2,
**caractérisé en ce**
**qu'**à l'étape g), une partie de fond est insérée sur la zone de bord du corps de récipient sur l'ouverture de fond et est soudée de manière annulaire au corps de récipient.

5. Procédé selon l'une quelconque des revendications 1 à 4,
**caractérisé en ce**
**que** le corps de récipient est fabriqué en un seul matériau.

6. Procédé selon l'une quelconque des revendications 1 à 4,
**caractérisé en ce**
**que** le corps de récipient est fabriqué en un matériau multicouche.

7. Procédé selon l'une quelconque des revendications 1 à 6,
**caractérisé en ce**
**que** la partie de fond est fabriquée dans le même matériau ou la même combinaison de matériaux que le corps de récipient.
